# DEMANDE DE BREVET EUROPEEN

(11) **EP 1 339 061 A1**
(43) Date de publication de la demande: **27.08.2003**
(21) Numéro de dépôt: 03075450.1
(22) Date de dépôt: 17.02.2003
(51) Int. Cl.: G11B 27/034, G06F 17/30

(54) **Procédé de montage vidéo**

(30) Priorité: 26.02.2002 FR 0202396
(71) Demandeur: Koninklijke Philips Electronics N.V., 5621 BA Eindhoven (NL)
(72) Inventeur: Mory, Benoît, 75008 Paris (FR)
(74) Mandataire: de la Fouchardière, Marie-Noelle

(57) **Abrégé**

L'invention propose un procédé de montage vidéo simple à utiliser, pouvant être implémenté sur des équipements grand-public ayant une capacité d'affichage et/ou de calcul limitée.
L'invention consiste à utiliser une description du matériel vidéo d'entrée Vi (par exemple une description de type MPEG-7), et à demander à l'utilisateur de fournir un plan en plusieurs parties du matériel vidéo Vo qu'il souhaite obtenir en sortie. Le plan est ensuite analysé partie par partie pour générer un critère de recherche relatif à chaque partie. Puis une recherche est effectuée dans la description D pour chaque critère de recherche généré. Les segments vidéo ainsi sélectionnés sont juxtaposés pour former le matériel vidéo de sortie.

Application : montage vidéo non professionnel ; caméra et appareils photo numériques. Référence : figure 1.

## Description

### Domaine de l'invention

L'invention concerne un procédé de montage pour produire un matériel de sortie à partir d'un matériel d'entrée comportant des images et/ou des séquences d'images. L'invention concerne aussi un programme comportant des instructions pour la mise en oeuvre d'un tel procédé de montage lorsqu'il est exécuté par un processeur.

L'invention concerne aussi un équipement électronique doté de moyens de lecture d'un matériel d'entrée comportant des images et/ou des séquences d'images, et de moyens de traitement dudit matériel d'entrée pour produire un matériel de sortie à partir dudit matériel d'entrée.

### Arrière plan technologique de l'invention

Le brevet US 5,404,316 décrit un procédé de traitement vidéo permettant de faire de l'édition vidéo. Le procédé décrit dans ce brevet est adapté à des utilisations professionnelles. Il est trop complexe pour être utilisé par le grand-public. Il est aussi trop complexe pour être mis en oeuvre sur des équipements électroniques grand-public ayant des capacités de traitement et/ou d'affichage limitées, en particulier sur des équipements électroniques portables.

### Résumé de l'invention

Un but de l'invention est de proposer un procédé de montage destiné à être utilisé par le grand-public, et susceptible d'être mis en oeuvre sur des équipements électroniques grand-public ayant des capacités de traitement et/ou d'affichage limitées, par exemple sur des caméras ou des appareils photos numériques.

Ce but est atteint avec un procédé de montage selon l'invention, tel que décrit dans le paragraphe introductif, et caractérisé en ce qu'il comporte:
- au moins une étape d'acquisition d'un plan en plusieurs parties relatif audit matériel de sortie,
- au moins une étape de sélection, à partir d'une description dudit matériel d'entrée, d'images et ou séquences d'images correspondant aux dites parties,
- au moins une étape d'ordonnancement, selon ledit plan, des images et / ou séquences d'images sélectionnées.

Optionnellement, un procédé de montage selon l'invention comporte aussi, pour générer ladite description :
- une étape d'extraction automatique d'une structure dudit matériel d'entrée,
- une étape d'annotation de ladite structure à partir d'informations sémantiques fournies par un utilisateur.

Ainsi, selon l'invention, au lieu d'effectuer des opérations de montage classiques telles que la sélection, le coupage, le collage d'images ou de séquences d'images, l'utilisateur fournit un plan pour le matériel de sortie, et dans certains cas, il annote une structure dudit matériel d'entrée, ladite structure étant obtenue par extraction automatique. Le montage se fait ensuite automatiquement en suivant le plan défini par l'utilisateur.

Le plan du matériel de sortie et les informations sémantiques sont fournies par l'utilisateur dans son langage naturel, par exemple manuellement en utilisant un clavier ou oralement en utilisant des outils de reconnaissance vocale.

Les opérations qui sont effectuées par l'utilisateur conformément à l'invention sont donc beaucoup plus simples que les opérations qui doivent être effectuées avec un procédé de montage selon l'art antérieur. Elles ne requièrent aucun savoir-faire spécifique. En particulier il n'est pas nécessaire de savoir manipuler correctement l'outil informatique pour utiliser un procédé de montage selon l'invention.

De plus, pour mettre en oeuvre un procédé de montage selon l'invention, il n'est pas nécessaire de disposer d'une interface utilisateur sophistiquée. Par conséquent l'invention peut être mise en oeuvre dans une grande variété d'équipements électroniques, notamment des équipements électroniques portables, par exemple des caméras ou des appareils photo numériques.

L'invention présente aussi l'avantage de permettre à l'utilisateur de modifier le montage obtenu, de façon simple et autant de fois qu'il le souhaite. En effet, un matériel de sortie Vo peut constituer un nouveau matériel d'entrée Vi' pour une nouvelle mise en oeuvre du procédé de montage selon l'invention. Il suffit à l'utilisateur de modifier le plan P, par exemple de supprimer ou de déplacer une phrase pour obtenir un nouveau montage.

### Brève description des figures

D'autres détails et avantages de l'invention apparaîtront dans la description qui va suivre, faite en regard des dessins annexés donnés à titre d'exemples non limitatifs :
- la figure 1 est un diagramme décrivant les principales étapes d'un procédé de montage selon l'invention,
- la figure 2 est un exemple d'équipement électronique selon l'invention.

### Description d'un mode de réalisation de l'invention

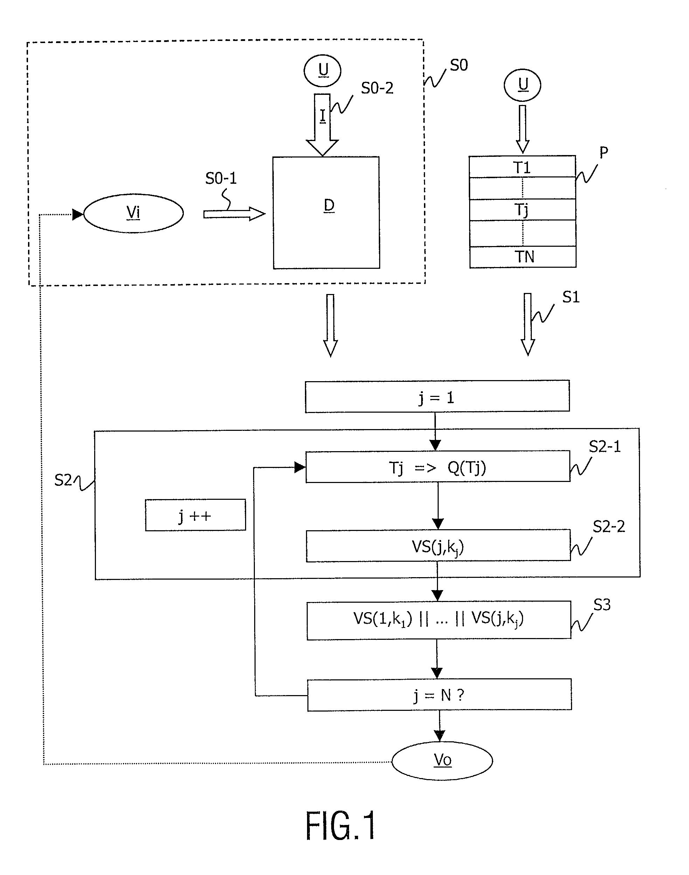

Sur la figure 1, on a représenté un diagramme résumant les différentes étapes d'un procédé de montage selon l'invention. Le procédé de montage selon l'invention permet de générer un matériel de sortie Vo à partir d'un matériel d'entrée Vi qui comporte des images et/ou séquences d'images, en tenant compte d'instructions définies par un utilisateur U.

Le procédé de montage selon l'invention utilise une description D du matériel d'entrée Vi.

Le procédé selon l'invention comporte une étape S1 d'acquisition d'un plan P relatif au matériel de sortie que l'utilisateur souhaite obtenir. Ce plan P est défini par l'utilisateur U. Il comporte plusieurs parties Tj (j=1,...,N).

Le procédé selon l'invention comporte des étapes de sélection S2 pour sélectionner dans la description D des images et/ou séquences d'images correspondant à chacune des parties Tj du plan P. Il comporte aussi des étapes d'ordonnancement S3 pour ordonnancer les images et/ou séquences d'images sélectionnées selon le plan P.

Pour la mise en oeuvre des étapes S2 et S3, le plan P est parcouru partie par partie. Pour chaque partie Tj :
- une étape S2-1 d'analyse logique du contenu de la partie Tj permet de générer un critère de recherche Q(Tj) relatif à ladite partie,
- une étape S2-2 de recherche dans la description D permet de sélectionner une ou plusieurs images et/ou séquences d'images VS(j, kⱼ) répondant au critère de recherche Q(Tj),
- et l'étape d'ordonnancement S3 consiste à ajouter la ou les images et/ou séquences d'images sélectionnées à la suite de la ou des images et/ou séquences d'images précédemment sélectionnées.

La suite d'images et/ou séquences d'images obtenue à la fin de la dernière étape d'ordonnancement S3 constitue le matériel de sortie Vo. Ce matériel d'entrée Vo peut constituer un nouveau matériel d'entrée Vi' pour une nouvelle mise en oeuvre des étapes S1, S2 et S3. Dans ce cas, à l'étape S1, l'utilisateur peut soit définir un nouveau plan P', soit modifier le plan P initial, en ajoutant, supprimant ou déplaçant une ou plusieurs parties Tj.

Avantageusement le procédé de montage selon l'invention comporte une étape optionnelle S0 de génération de la description D. L'étape S0 est mise en oeuvre lorsqu' aucune description n'est disponible pour le matériel d'entrée Vi. Avantageusement, l'étape S0 comporte:
- une étape S0-1 d'extraction automatique d'une structure du matériel d'entrée Vi,
- une étape S0-2 d'annotation de ladite structure à partir d'informations sémantiques I fournies par l'utilisateur.

Des outils pour générer une description d'un tel matériel d'entrée sont par exemple décrits dans l'article intitulé «A Survey on the Automatic Indexing of Video Data » publié par R. Brunelli , O. Mich et C. M. Modena dans la revue « Journal of Visual Communication and Image Representation 10, 78-112 (1999) ».

Avantageusement, la description produite avec ce type d'outils est conforme à la norme MPEG-7. Une description MPEG-7 est une structure hiérarchique de segments vidéo qui comportent des éléments qui sont des instances de descripteurs définis dans la norme MPEG-7. Parmi les descripteurs définis dans la norme MPEG-7, figurent des descripteurs destinés à être utilisés pour décrire les aspects conceptuels qui ne peuvent pas se déduire automatiquement du matériel d'entrée (par exemple le contexte, le lieu, le temps, l'action, les objets, les personnes...). Le contenu des éléments qui sont des instances de ces descripteurs doit être fourni par un opérateur. Lorsque le procédé de montage selon l'invention comporte une étape S0 de génération de la description D, le contenu des éléments qui sont des instances de ces descripteurs est constitué par les informations sémantiques I fournies par l'utilisateur U.

Pour permettre d'établir une correspondance entre le plan P et la description D, il faut que le plan P et les informations sémantiques I soient définis dans un même langage, par exemple dans une langue parlée par l'utilisateur U. Dans ce cas chaque partie Tj du plan P est constituée par une phrase. Le plan P et les informations sémantiques I sont saisies manuellement en utilisant un clavier, ou oralement en utilisant des moyens de reconnaissance vocale.

On va maintenant donner un exemple d'une description D pour un matériel d'entrée constitué de séquences vidéo filmées par l'utilisateur pendant ses vacances (cette description D est une description conforme à la norme MPEG-7 ; elle est écrite dans le langage de balisage XML défini par le consortium W3C) :

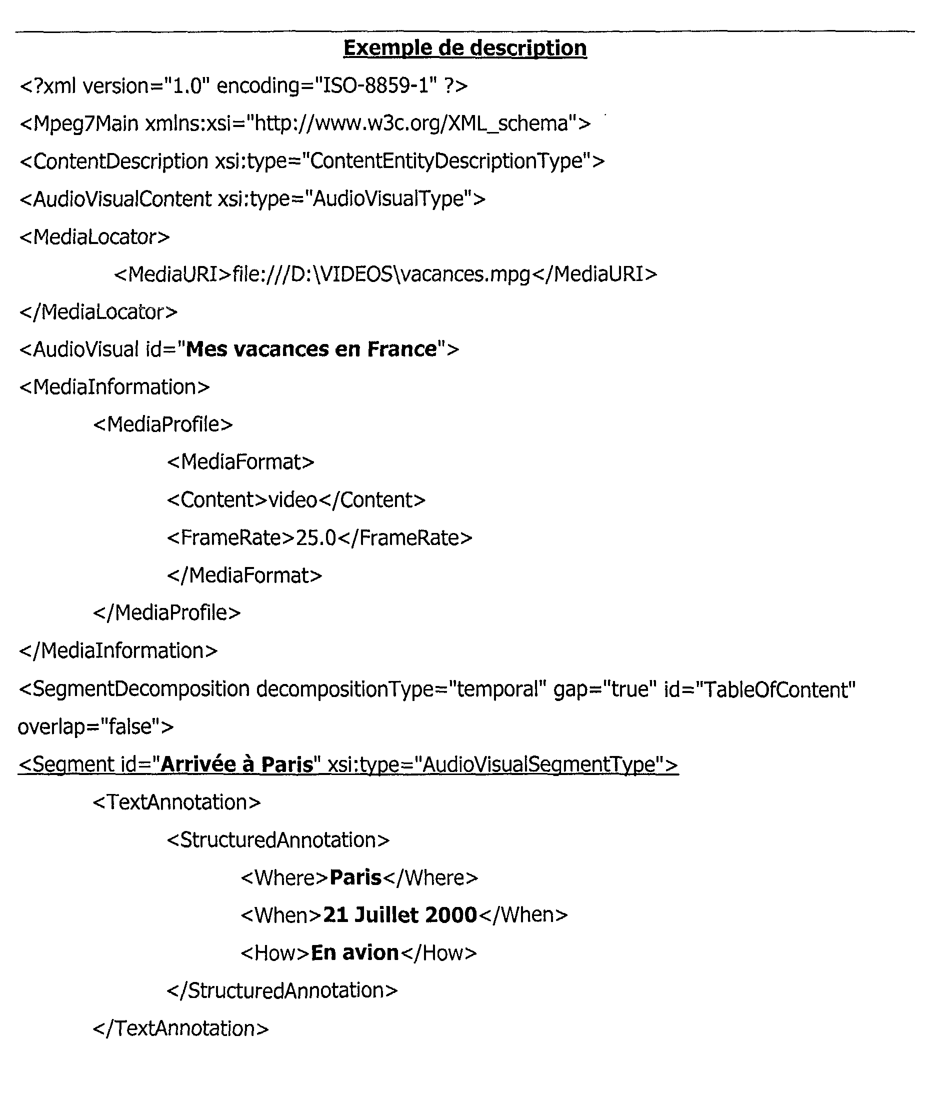

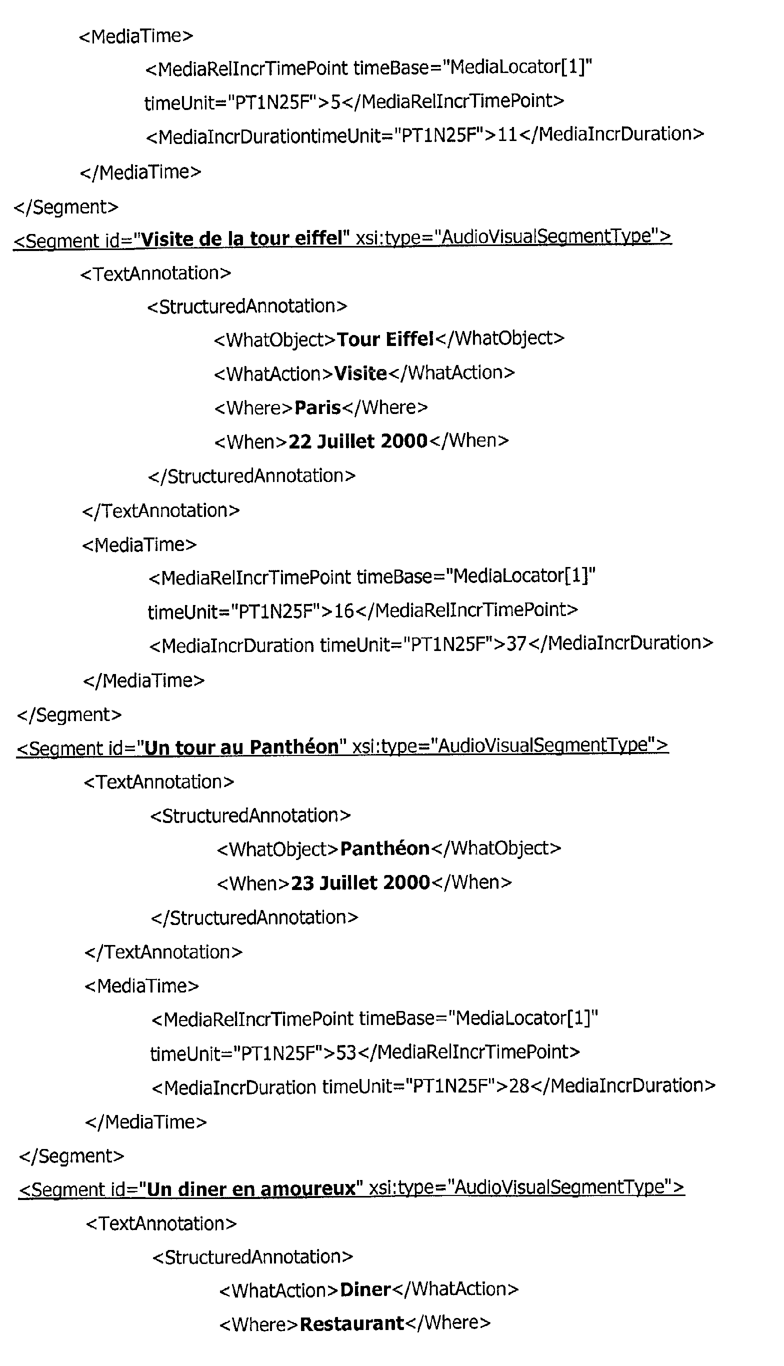

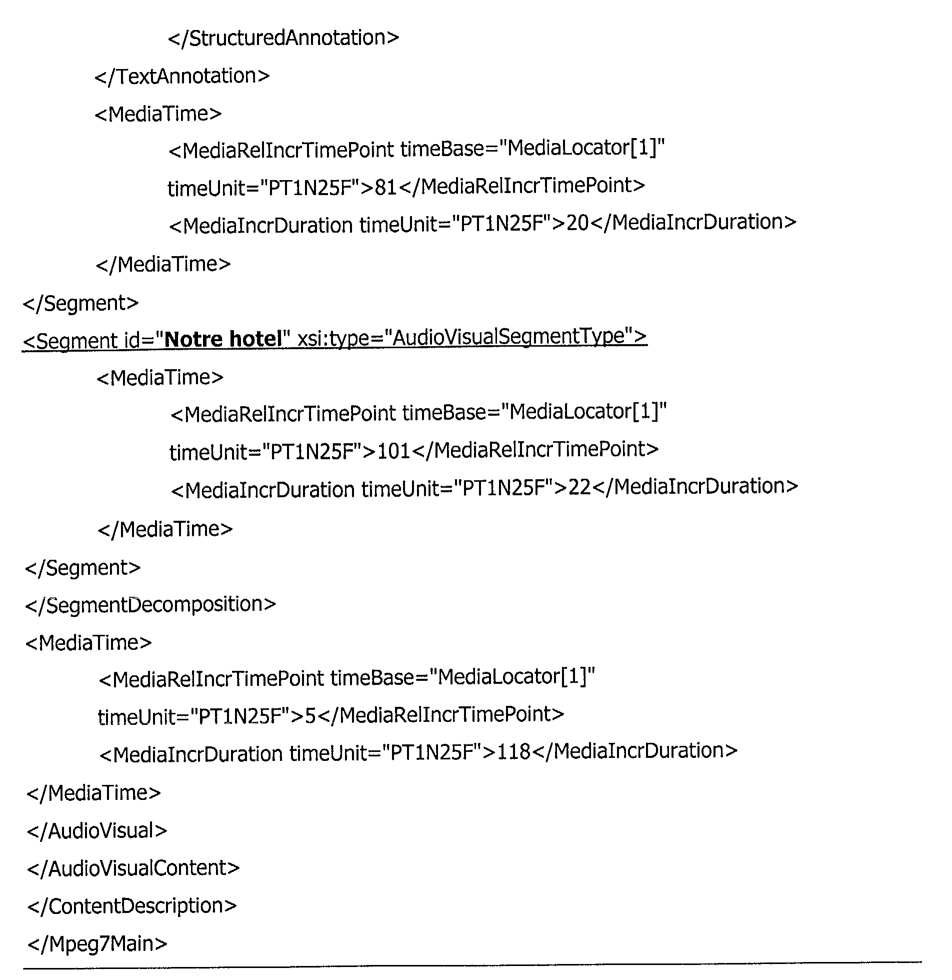

Dans cet exemple, les informations sémantiques I ont été indiquées en caractères gras. Cette description comporte un segment <AudioVisual> relatif à l'ensemble du matériel d'entrée Vi. Ce segment <AudioVisual> comporte lui-même 4 éléments <Segment> relatifs à 4 segments vidéo. Les éléments <Segment> comportent notamment des éléments <WhatAction>, <Where>, <When>, <How> qui décrivent respectivement le type de l'action, le lieu de l'action, le temps de l'action et le mode d'action, et qui contiennent des informations sémantiques. L'élément <AudioVisual> et les éléments <Segment> ont chacun un attribut « id » contenant un titre. Ce titre est aussi une information sémantique.

On va maintenant donner un exemple de plan P pouvant être utilisé pour générer un matériel de sortie Vo à partir du matériel d'entrée Vi qui est décrit dans cette description:

### Exemple de plan

« Pendant les vacances, nous avons passé deux jours à Paris. Nous sommes descendus à l'hotel Beauséjour. Nous avons fait un tour au Panthéon. Nous avons aussi visité la Tour Eiffel. Nous avons conclu notre voyage par un dîner en amoureux.»

Dans cet exemple, le matériel de sortie Vo comportera les 4 segments vidéo contenus dans le matériel d'entrée Vi, mais réordonnés de la façon suivante : « Arrivée à Paris », « Notre hôtel », « Un tour au panthéon », « Visite de la Tour Eiffel », « Dîner en amoureux ».

Pour la mise en oeuvre de l'étape S2-1 de formulation d'un critère de recherche, plusieurs modes de réalisation sont utilisables.

Dans un premier mode de réalisation, le critère de recherche est constitué par la phrase entière.

Dans un second mode de réalisation, un ou plusieurs mots significatifs sont extraits de la phrase Tj (par exemple en utilisant un dictionnaire pour supprimer les mots inutiles tels que le articles, les prépositions, les liens entre les mots...). Les mots extraits sont ensuite utilisés indépendamment les uns des autres pour former un critère de recherche.

Dans un troisième mode de réalisation, une analyse grammaticale est effectuée de façon à établir des liens logiques entre les mots significatifs. Et les mots extraits sont ensuite utilisés en combinaison pour former un critère de recherche. Avantageusement, l'analyse grammaticale est aussi utilisée pour déterminer le descripteur sur lequel la recherche doit porter pour chaque mot ou combinaison de mots contenu dans le critère de recherche. Par exemple, si l'analyse grammaticale montre que le premier mot significatif de la phase est un nom propre relatif à une personne, le descripteur à scruter pour ce premier mot sera le descripteur "who" ; si l'analyse grammaticale montre que le second mot significatif de la phrase est un lieu, le descripteur à scruter pour ce second mot sera le descripteur "where"... Dans ce cas, le segment video <Segment> qui répond au critère de recherche est celui pour lequel :
- l'élément <Who> contient ledit premier mot,
- et l'élément <Where> contient ledit second mot.

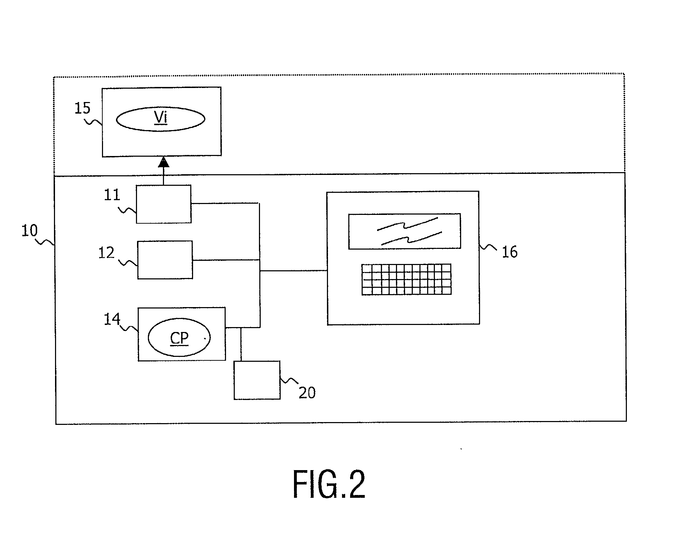

Sur la figure 2 on a donné un exemple d'équipement électronique selon l'invention. D'après la figure 2, un équipement 10 selon l'invention comporte des moyens 11 de lecture d'un matériel d'entrée Vi, une mémoire de programme 12 et un processeur 14. Le matériel d'entrée Vi est stocké dans une mémoire de données 15 qui fait ou non partie de l'équipement 10. Cette mémoire de données 15 est par exemple constituée par un composant, un disque dur, ou un support amovible du type disque, cassette, disquette... L'équipement 10 comporte aussi une interface utilisateur 16 qui permet au moins à l'utilisateur de saisir un plan P pour la mise en oeuvre du procédé de montage selon l'invention. Optionnellement, l'interface utilisateur 16 permet aussi de saisir les informations sémantiques I destinées à être utilisées pour annoter la description du matériel d'entrée Vi. Dans un premier mode de réalisation, l'interface 16 est une interface vocale. Elle comporte un microphone et des moyens logiciels de reconnaissance vocale stockés dans la mémoire de programme 12. De façon optionnelle elle comporte aussi un écran d'affichage. Dans un deuxième mode de réalisation, l'interface 16 est une interface tactile. Elle comporte par exemple un clavier et un écran d'affichage, ou un écran tactile.

La mémoire de programme 12 contient notamment un programme CP qui comporte des instructions pour implémenter un procédé de montage selon l'invention lorsque le programme CP est exécuté par le processeur 14. Le matériel de sortie Vo généré avec le procédé de montage selon l'invention est par exemple stocké dans la mémoire de données 15.

Dans certains cas, l'équipement 10 comporte aussi des moyens 20 de capture du matériel d'entrée Vi.

## Revendications

1. Procédé de montage pour produire un matériel de sortie (Vo) à partir d'au moins un matériel d'entrée (Vi) comportant des images et/ou des séquences d'images, **caractérisé en ce qu'**il comporte :
- au moins une étape (S1) d'acquisition d'un plan (P) en plusieurs parties (Tj) relatif audit matériel de sortie,
- au moins une étape (S2) de sélection, à partir d'une description (D) dudit matériel d'entrée, d'images et ou séquences d'images correspondant aux dites parties,
- au moins une étape (S3) d'ordonnancement, selon ledit plan, des images et / ou séquences d'images sélectionnées.

2. Procédé de montage selon la revendication 1, **caractérisé en ce qu'**il comporte, pour générer ladite description :
- une étape (S0-1) d'extraction automatique d'une structure dudit matériel d'entrée,
- une étape (S0-2 d'annotation de ladite structure à partir d'informations sémantiques (I) fournies par un utilisateur (U).

3. Procédé de montage selon la revendication 1, **caractérisé en ce que** ladite étape de sélection comporte :
- une étape (S2-1) d'analyse dudit plan (P) pour générer au moins un critère de recherche (Q(Tj)) relatif à chacune desdites parties (Tj),
- une étape (S2-2) de recherche dans ladite description (D) d'une ou plusieurs images et/ou séquences d'images répondant à chaque critère de recherche (Q(Tj)).

4. Equipement électronique doté de moyens de lecture (11) d'un matériel d'entrée (Vi) comportant des images et/ou des séquences d'images, et de moyens de traitement (12, 14, 16, CP) dudit matériel d'entrée pour produire un matériel de sortie (Vo) à partir dudit matériel d'entrée, **caractérisé en ce que** lesdits moyens de traitement comportent:
- des moyens d'acquisition d'un plan en plusieurs parties relatif audit matériel de sortie,
- des moyens de sélection, à partir d'une description dudit matériel d'entrée, d'images et ou séquences d'images correspondant aux dites parties,
- des moyens d'ordonnancement, selon ledit plan, des images et / ou séquences d'images sélectionnées.

5. Equipement électronique selon la revendication 4, **caractérisé en ce que** lesdits moyens de sélection comportent:
- des moyens d'analyse dudit plan pour générer au moins un critère de recherche relatif à chacune desdites parties,
- des moyens de recherche dans ladite description d'une ou plusieurs images et/ou séquences d'images répondant à chaque critère de recherche.

6. Equipement électronique selon la revendication 4, **caractérisé en ce qu'**il comporte, pour générer ladite description :
- des moyens d'extraction automatique d'une structure dudit matériel d'entrée,
- des moyens d'annotation de ladite structure à partir des informations sémantiques fournies par un utilisateur.

7. Equipement électronique selon la revendication 4, **caractérisé en ce qu'**il comporte des moyens (20) de capture dudit matériel d'entrée.

8. Programme (CP) comportant des instructions pour la mise en oeuvre d'un procédé de montage selon l'une des revendications 1ou 2, lorsque ledit programme est exécuté par un processeur (14).
